(19) 

Europäisches
Patentamt
European
Patent Office
Office européen
des brevets

(11) **EP 3 161 793 B1**

(12) **EUROPEAN PATENT SPECIFICATION**

(45) Date of publication and mention
of the grant of the patent:
**08.05.2019 Bulletin 2019/19**

(21) Application number: **14896773.0**

(22) Date of filing: **30.06.2014**

(51) Int Cl.:
*G06T 15/00* *(2011.01)*   *G06T 11/40* *(2006.01)*

(86) International application number:
**PCT/CN2014/081164**

(87) International publication number:
**WO 2016/000129 (07.01.2016 Gazette 2016/01)**

(54) **ADAPTIVE PARTITION MECHANISM WITH ARBITRARY TILE SHAPE FOR TILE BASED RENDERING GPU ARCHITECTURE**

ADAPTIVER PARTITIONIERUNGSMECHANISMUS MIT BELIEBIGER KACHELFORM FÜR KACHELBASIERTE DARSTELLUNG EINER GPU-ARCHITEKTUR

MÉCANISME DE PARTITION ADAPTATIF AVEC FORME DE CARREAU ARBITRAIRE POUR ARCHITECTURE GPU DE REPRODUCTION PAR CARREAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.05.2017 Bulletin 2017/18**

(73) Proprietor: **Intel Corporation
Santa Clara, CA 95054 (US)**

(72) Inventors:
• **YANG, Yi
Shanghai 201101 (CN)**
• **CHEN, Xiaoming
Santa Clara, CA 95054 (US)**

• **CHEN, Feng
Shanghai 200135 (CN)**
• **HAO, Yan
Santa Clara, CA 95054 (US)**

(74) Representative: **Goddar, Heinz J.
Boehmert & Boehmert
Anwaltspartnerschaft mbB
Pettenkoferstrasse 22
80336 München (DE)**

(56) References cited:
**EP-A2- 2 315 180        WO-A1-2007/076892
WO-A1-2013/130030   CN-A- 103 500 463
GB-A- 2 506 706          US-A1- 2011 298 813**

EP 3 161 793 B1

**Description**

FIELD

The present disclosure generally relates to the field of electronics. More particularly, an embodiment relates to an adaptive partition mechanism with arbitrary tile shape for tile based rendering GPU (Graphics Processing Unit) architecture.

BACKGROUND

As integrated circuit (IC) fabrication technology improves, manufacturers are able to integrate additional functionality onto a single silicon substrate. As the number of these functionalities increases, however, so does the number of components on a single IC chip. Additional components add additional signal switching, in turn, generating more heat. The additional heat may damage an IC chip by, for example, thermal expansion. Also, the additional heat may limit usage locations and/or applications of a computing device that includes such chips. For example, a portable computing device may solely rely on battery power. Hence, as additional functionality is integrated into portable computing devices, the need to reduce power consumption becomes increasingly important, for example, to maintain battery power for an extended period of time. Non-portable computing systems also face cooling and power generation issues as their IC components use more power and generate more heat.

One type of component that tends to use a relatively significant amount of power and have a significant effect on performance is the graphics circuitry included on some integrated circuit chips. Hence, controlling the power consumption andlor operations of the graphics circuitry may have a direct effect on overall system power consumption andlor performance.

BRIEF DESCRIPTION OF THE DRAWINGS

The detailed description is provided with reference to the accompanying figures. In the figures, the left-most digit(s) of a reference number identifies the figure in which the reference number first appears. The use of the Same reference numbers in different figures indicates similar or identical items.

Figs. 1, 3A, 3B, and 7-9 illustrate block diagrams of embodiments of computing systems, which may be utilized to implement various embodiments discussed herein.

Fig. 2 illustrates a Scene with tile partitioning, according to an embodiment.

Fig. 4A illustrates a two level tile structure, according to an embodiment.

Fig. 4B illustrates a block diagram of a super tile table, according to an embodiment.

Fig. 4C illustrates a block diagram of a primitive intersection cost buffer, according to an embodiment.
WO 2013/130030 A1 discloses an apparatus comprising logic, the logic at least partially comprising hardware logic, to determine a cost value for each atomic tile of an image.

Fig. 5A shows a primitive intersection cost result for a sample frame, according to an embodiment

Fig. 5B illustrates a search based Super Tile generating mechanism, according to an embodiment.

Fig. 5C illustrates flow of image data from a tile buffer to a frame buffer, according to an embodiment.

Fig. 6 illustrates a flow diagram of a method to perform tile-based rendering operations, according to some embodiments.

DETAILED DESCRIPTION

In the following description, numerous specific details are set forth in order to provide a thorough understanding of various embodiments. However, various embodiments may be practiced without the specific details. In other instances, well-known methods, procedures, components, and circuits have not been described in detail so as not to obscure the particular embodiments. Further, various aspects of embodiments may be performed using various means, such as integrated semiconductor circuits ("hardware"), computer-readable instructions organized into one or more programs ("software"), or some combination of hardware and software. For the purposes of this disclosure reference to "logic" shall mean either hardware, software, firmware, or some combination thereof.

Some embodiments provide an adaptive partition mechanism with arbitrary tile shape for tile based rendering graphics logic. As discussed herein, a "tile" generally refers to a portion of a scene or image frame under consideration for processing by graphics logic (e.g., for graphics processing, rendering, etc.). The graphics logic may include a GPU (Graphics Processing Unit) or other types of logic that perform computation(s) relating to graphics task(s), such as operation(s) that manipulate an image, frame, scene, etc., e.g., as will be further discussed herein. While some embodiments are discussed with reference to graphics logic, embodiments are not limited to graphics related logic and may be also applied to other types of non-graphic (e.g., general purpose) logic. Moreover, various embodiments may be performed for any type of computing device such as a desktop computer, a mobile computer (such as a smartphone, tablet, UMPC (Ultra-Mobile Personal Computer), laptop computer, Ultrabook™ computing device, smart watch, smart glasses, etc.), a work station, etc., which may be embodied on a SOC (System On Chip) platform in an embodiment.

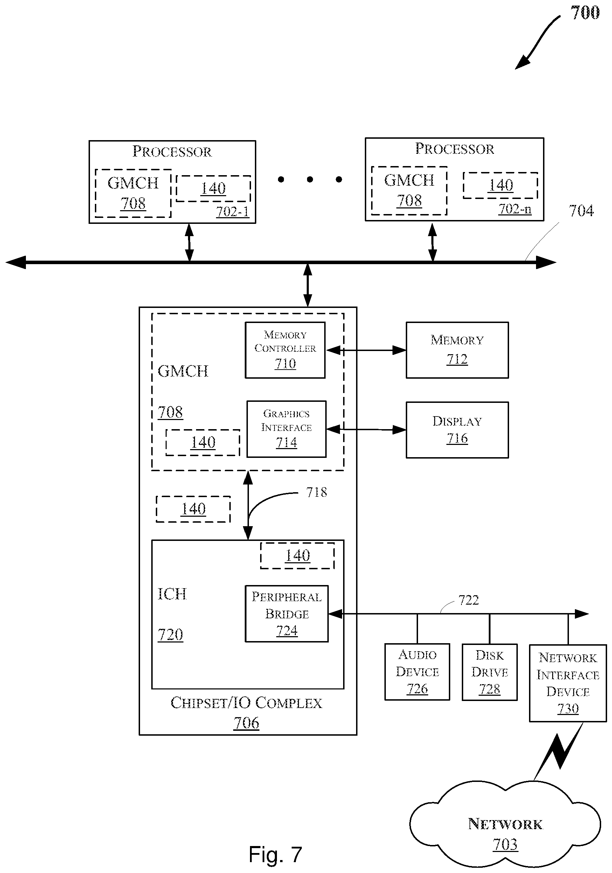

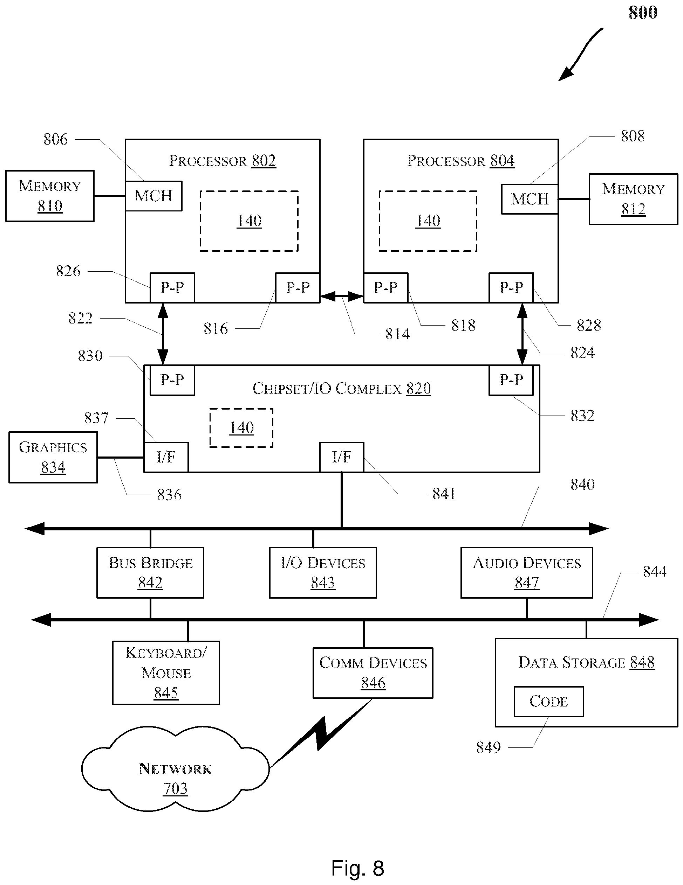

Moreover, the scenes, images, or frames discussed herein (e.g., which may be processed by the graphics logic in various embodiments) may be captured by an image capture device (such as a digital camera (that may be embedded in another device such as a smart phone, a tablet, a laptop, a stand-alone camera, etc.) or an analog device whose captured images are subsequently converted to digital form). Also, the scenes, images, or frames discussed herein may be generated by art design, game design, or any kind of 3D/2D (two dimensional/three dimensional) industry design. For example, a scene may refer to a set of geometry structure and related texture maps, lighting effects, etc. Moreover, the image capture device may be capable of capturing multiple frames in an embodiment. Further, one or more of the frames in the scene are designed/generated on a computer in some embodiments. Also, one or more of the frames of the scene may be presented via a display (such as the display discussed with reference to Figs. 7 and/or 8, including for example a flat panel display device, etc.).

Moreover, some tile-based SOC GPU architectures may utilize a parameter buffer free design, which can improve performance and reduce power consumption by avoiding read and write operations for parameter data. Correspondingly, a two-pass vertex shading mechanism may be used to obtain the parameter position for tile mapping (e.g., to find the tiles to which a primitive belongs) and property calculation. As discussed herein, a "primitive" generally refers to a (e.g., geometric) shape (such as a point, line, triangle, etc.) that the graphics logic is capable of handling (e.g., drawing, storing, etc.). Vertex rendering of primitives which span over several tiles will cost more (e.g., in terms of power consumption and/or performance hit) due to duplicate read operations and calculations of vertex data.

To this end, some embodiments provide an adaptive tile partition approach to alleviate redundant vertex data read and calculation operations in a parameters buffer free design. Accordingly, such embodiments reduce power consumption and/or increase performance, and may also decrease buffer size requirements and semiconductor bump costs.

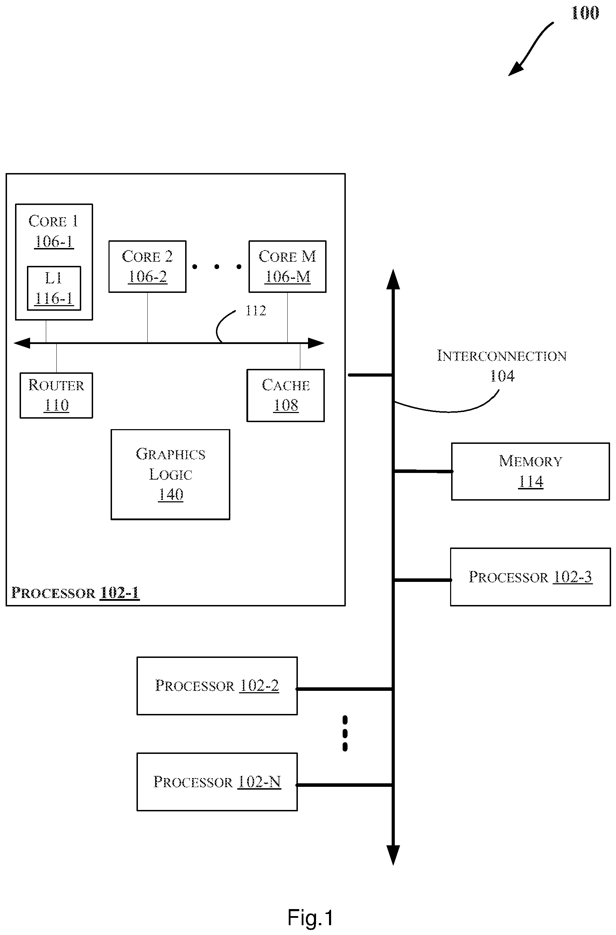

Some embodiments may be applied in computing systems that include one or more processors (e.g., with one or more processor cores), such as those discussed with reference to Figs. 1-9, including for example mobile computing devices such as a smartphone, tablet, UMPC (Ultra-Mobile Personal Computer), laptop computer, Ultrabook™ computing device, smart watch, smart glasses, etc. More particularly, Fig. 1 illustrates a block diagram of a computing system 100, according to an embodiment. The system 100 may include one or more processors 102-1 through 102-N (generally referred to herein as "processors 102" or "processor 102"). The processors 102 may be general-purpose CPUs and/or GPUs in various embodiments. The processors 102 may communicate via an interconnection or bus 104. Each processor may include various components some of which are only discussed with reference to processor 102-1 for clarity. Accordingly, each of the remaining processors 102-2 through 102-N may include the same or similar components discussed with reference to the processor 102-1.

In an embodiment, the processor 102-1 may include one or more processor cores 106-1 through 106-M (referred to herein as "cores 106," or "core 106"), a cache 108, and/or a router 110. The processor cores 106 may be implemented on a single integrated circuit (IC) chip. Moreover, the chip may include one or more shared and/or private caches (such as cache 108), buses or interconnections (such as a bus or interconnection 112), graphics and/or memory controllers (such as those discussed with reference to Figs. 7-9), or other components.

In one embodiment, the router 110 may be used to communicate between various components of the processor 102-1 and/or system 100. Moreover, the processor 102-1 may include more than one router 110. Furthermore, the multitude of routers 110 may be in communication to enable data routing between various components inside or outside of the processor 102-1.

The cache 108 may store data (e.g., including instructions) that are utilized by one or more components of the processor 102-1, such as the cores 106. For example, the cache 108 may locally cache data stored in a memory 114 for faster access by the components of the processor 102 (e.g., faster access by cores 106). As shown in Fig. 1, the memory 114 may communicate with the processors 102 via the interconnection 104. In an embodiment, the cache 108 (that may be shared) may be a mid-level cache (MLC), a last level cache (LLC), etc. Also, each of the cores 106 may include a level 1 (LI) cache (116-1) (generally referred to herein as "L1 cache 116") or other levels of cache such as a level 2 (L2) cache. Moreover, various components of the processor 102-1 may communicate with the cache 108 directly, through a bus (e.g., the bus 112), and/or a memory controller or hub.

As shown in Fig. 1, the processor 102 may further include graphics logic 140 to perform various graphics related operations such as discussed herein. Logic 140 may have access to one or more storage devices discussed herein (such as cache 108, L1 cache 116, memory 114, register(s), or another memory in system 100) to store information relating to operations of the logic 140, such as information communicated with various components of system 100 as discussed here. Also, while logic 140 is shown inside the processor 102, it may be located elsewhere in the system 100 in various embodiments. For example, logic 140 may replace one of the cores 106, may be coupled directly to interconnection 112 and/or interconnection 104, etc.

Based on the screen position information of primitives, graphics logic (e.g., logic 140) adaptively partitions tiles with arbitrary shapes (e.g., and not necessarily rectangular) to reduce the number of primitives which span over different tiles; thus, reducing the redundant computation and memory read operations. Such a tile partition mechanism adaptively sets the tile shape to match the shape of high cost primitives, and automatically avoids the tile boundary across the dense primitives areas.

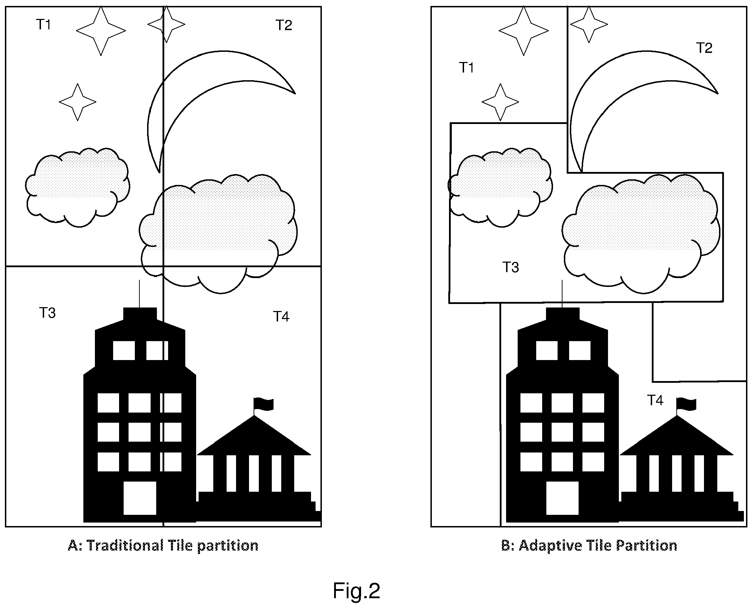

Fig. 2 illustrates a scene with a traditional tile partition (A) and an adaptive tile partition (B), according to an embodiment. The scene has three drawcalls: drawcall #1 renders the moon and stars, drawcall #2 renders the clouds, and drawcall #3 renders the buildings. Assuming the mesh of clouds contains a very complicated properties list for each vertex and needs do some bump mapping to give the final position from model space to screen space, it will cost more (e.g., in terms of the amount of the computation, processing power, and/or power consumption) if the primitives in the mesh of clouds are separated into several tiles. There are four tiles on the screen, T1, T2, T3, and T4, the lines illustrate the border of tiles.

As can be seen in Fig. 2, the traditional tile partition method (A) generates many intersection between primitives and tiles, whereas the adaptive tile partition mechanism (B) can avoid high cost intersection by changing the shape of the tiles. Moreover, the traditional tile partition solution (B) uses big tiles, e.g., to decrease redundant computation and memory access of its parameter buffer free design. However, it has at least the following two issues to consider: (a) it needs a large tile buffer, which incurs large die area and high cost (for example, the tile in this solution is constituted of a hundred pixels by a hundred pixels and the hardware provides one MB of tile buffer to accommodate it); and (b) a big tile can decrease the possibility of "intersection between primitive and tile" (however, the current implementation is not smart enough, e.g., because primitives often span over different tiles randomly and about 10%-20% of redundant computation may be observed on average for some benchmarks).

By contrast, some embodiments use an adaptive tile partition mechanism, which can avoid the redundant processing of high cost primitive. Moreover, this solution doesn't need extreme large tile buffer.

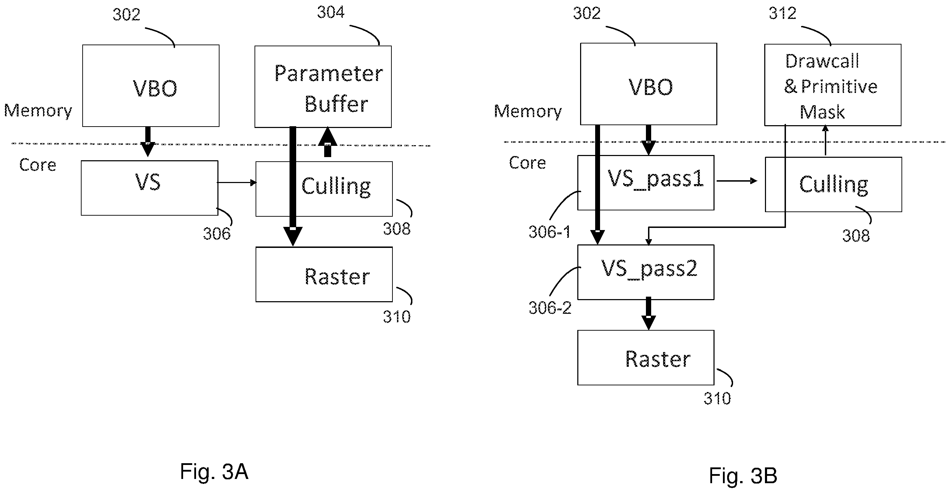

Fig. 3A illustrates a block diagram of components of a graphics processing computing system with a parameter buffer, according to an implementation. The core side of Fig. 3A shows sample logic that can be provided in the logic 140 in an embodiment. On the storage/memory side (e.g., which may be the same or similar to storage/memory devices discussed with reference to Figs. 1 or 7-9), a VBO (Vertex Buffer Object) storage 302 and a parameter buffer 304 are present to store vertex object and intermediate vertex shading data, respectively. Generally, tile based rendering architectures perform vertex shading in a primitive manner but pixel shading in a tile manner. To support this kind of manner transition, a memory buffer called parameter buffer 304 is used to store the intermediate results generated by Vertex Shading (VS) logic 306. As shown in Fig. 3A, the VBO data (e.g., stored in VBO storage 302) is passed to logic VS 306 (to perform vertex shading operations), followed by culling logic 308 (e.g., to remove the primitives outside the viewport), and subsequently stored in the parameter buffer 304 for subsequent processing by raster logic 310 (e.g., to rasterize the primitives in the frame).

As a result, the parameter buffer 304 causes additional memory traffic but it is used because the primitive data may reside in more than one tile (which is referred to as an intersection of primitive and tile). The parameter buffer 304 requires a relatively large portion of memory to record the properties generated by vertex shader logic 306 and per-tile data structure. For some benchmarks, the size of the parameter buffer can be 10MB to 100MB. Also, each access to the parameter buffer 304 will cost extra bandwidth.

Fig. 3B illustrates a block diagram of components of a graphics processing computing system without a parameter buffer, which may be utilized in some embodiments. The core side of Fig. 3B shows sample logic that can be provided in the logic 140 in an embodiment. More particularly, some implementations may use a two-pass vertex shading (e.g., as illustrated by VS logics 306-1 and 306-2 in Fig. 3B) to be able to omit the parameter buffer 304 of Fig. 3A. For such parameter buffer free designs, the vertex shading logic has nowhere to store the vertex shading results. More particularly, the vertex shading flow is broken into two passes: (1) the first pass (e.g., at logic 306-1) calculates the screen space position of every vertex draw call by draw call (e.g., by logic 312, which will, in turn, decide the tile(s) which the primitives fall into); and (2) the second pass (e.g., at logic 306-2) is in tile manner, e.g., for each tile, VS logic 306-2 traverses all related primitives and performs complete vertex shading operations. In such a design, vertex rendering of primitives which span several tiles will cost more due to duplicate read and calculation operations of vertex data. Using larger tile size (e.g., hundreds of pixels by hundreds of pixels) can alleviate the intersection to some extent.

Moreover, larger tile size may not avoid the intersection effectively. For the existing large tile solution, it may produce about 10%-20% of the redundant vertex shader computation on some benchmarks. Redundant memory access by these computations may be even larger. Furthermore, a large tile size design needs to equip a relatively large size of on-chip tile buffer (e.g., one MB for some cases, which significantly increases the chip area and cost.

In some embodiments, the intersection of primitives and tiles are reduced, which in turn reduce or avoid the waste produced by the additional memory traffic and computations.

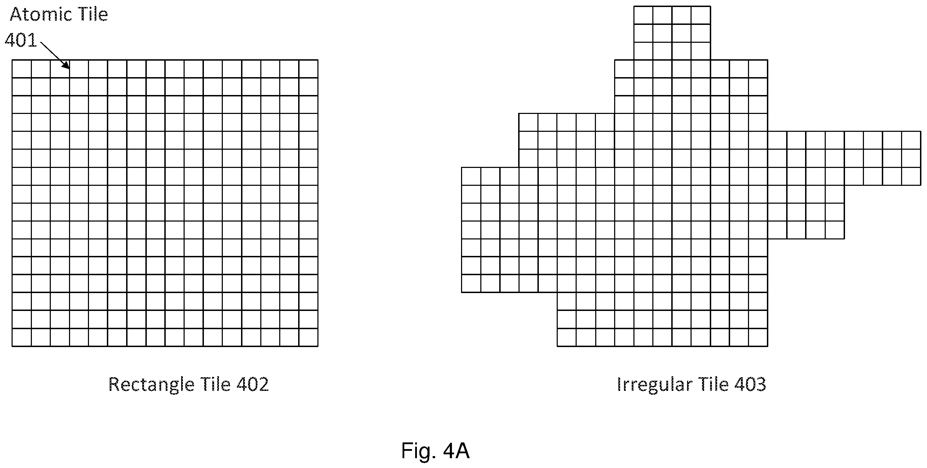

Fig. 4A illustrates a two level tile structure, according to an embodiment. As shown in Fig. 4A, two layers of tiles are used. The high level layer is defined as Super Tile, i.e., the structure formed by 402 and 403. The low level tile structure is defined as Atomic Tile 401, which is an undividable rectangle pixel block, as discussed herein. In turn, the Super Tile is made up of a set of Atomic Tiles. In some embodiments, the Super Tile is not necessarily a rectangle. It can be any shape. The Super Tile's size may however not exceed the tile buffer size.

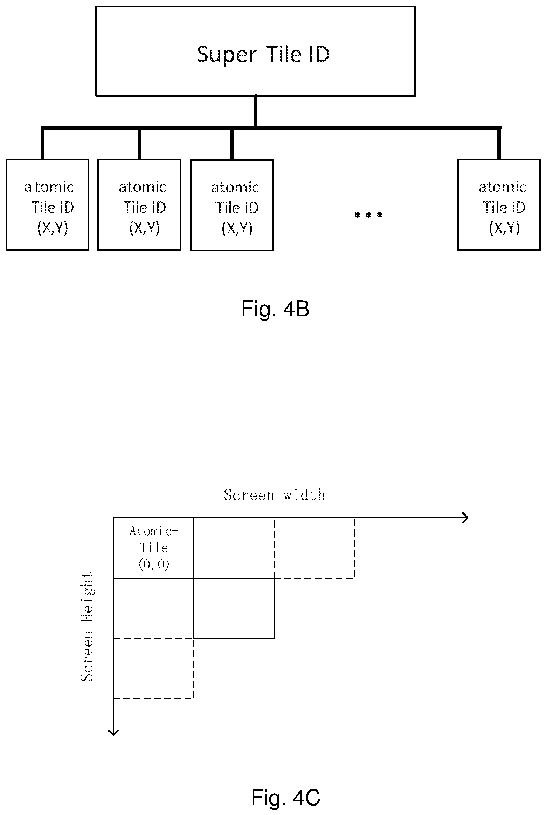

In Fig. 4A, the Atomic Tile is in 16x16 pixels. The Super Tile 402 in rectangle may be 256x256 pixels. So, the rectangle tile 402 contains 256 Atomic Tiles. Each atomic tile 401 may be assigned a two-dimension identifier (ID), which is directly mapped to its screen position. The Super Tile may be managed with a Super Tile Table ("STT") shown in Fig. 4B (which illustrates a block diagram of a super tile table, according to an embodiment). As shown in Fig. 4B, each STT may consist of a Super Tile ID and a list of atomic tile IDs (two-dimension screen position).

Fig. 4C illustrates a block diagram of a primitive intersection cost buffer, according to an embodiment. A Primitive Intersection Cost (PIC) value may be defined as a metric for the cost, where a primitive spans over multiple tiles. This metric may be in proportion to the vertex property number and vertex shader complexity. In an embodiment, the PIC value is calculated per the following formula:

$$PIC = (\alpha S + \beta L) * V$$

In the above formula, "S" refers to the vertex element size in bytes, "L" is the vertex shader length (corresponding to the number of instructions in the shader logic), $\alpha$ and $\beta$ are the weight of S and L in PIC, $\alpha + \beta = 1.0$, respectively (which can be tuned), and "V" is the number of vertices of the primitive. Further, the primitives belonging to the same draw call have the same PIC value.

"PIC of atomic Tile" (PICT) may be defined as the sum of PIC values of primitives that span over a current atomic tile. A high PICT means a high rendering cost of those primitives in the corresponding atomic tile. These kinds of atomic tiles are ineligible to be used as boundary of the Super Tile. Further the PICT value of each atomic tile may be stored in a Primitive Intersection Cost Buffer (PICB), such as shown in Fig. 4C. This buffer indexed as a two-dimensional data structure, e.g., each element of which maps to an atomic Tile of the screen (such as shown in Fig. 4C).

In an embodiment, the PICB is created by the following pseudo code:

```
Initialize PICB to zero;
for each primitive
    for each atomic-Tile[X,Y] intersect with primitive
        PICB[X,Y] += PIC;
```

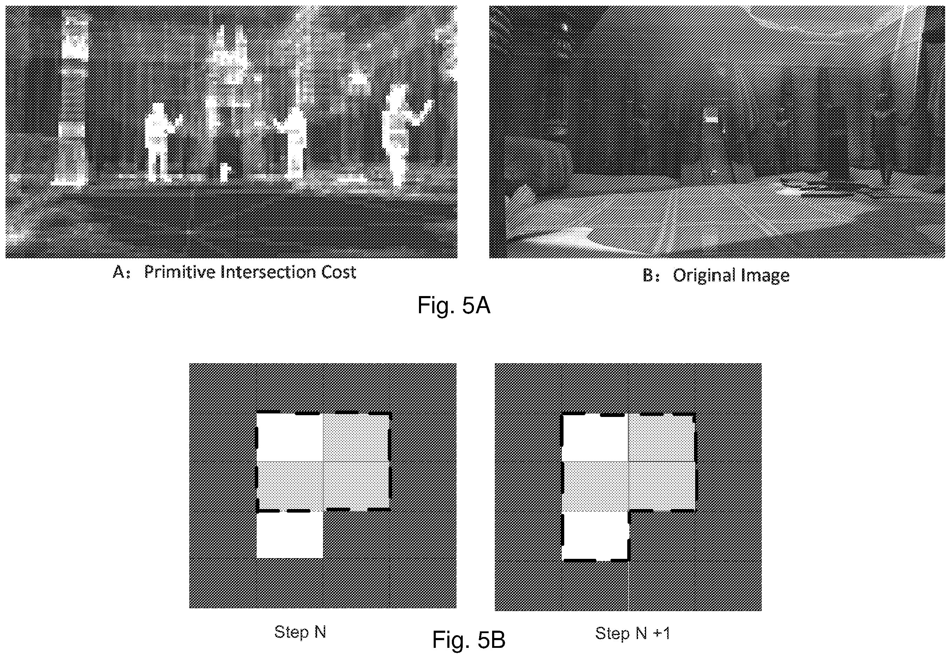

Fig. 5A shows the Primitive Intersection Cost result for a sample frame, according to an embodiment. In this example, the screen size is 1920x1080 pixels, which is divided into 120x68 atomic Tiles with size of 16x16 pixels. Fig. 5A part A is the visual image of the PICB, the brightness means high primitive intersection cost and the darkness means low primitive intersection cost. Fig. 5A part B is the corresponding final rendered image. Accordingly, PICB may only record one number for a 16x16 atomic tiles, assuming 16-bit. It will cost less than 16KB on chip buffer for a full HD screen.

In an embodiment, a Super Tile generating algorithm (e.g., performed by logic 140) is used to obtain a Super Tile partition mechanism. In the boundary of Super Tile, a number of high cost primitives are grouped into a super tile without spanning over each other. The Super Tile generation is an expanding procedure based on PICB, in an embodiment. It starts with covering the highest cost atomic Tiles with a small and rectangle Super Tile. The algorithm then grows the seed the Super Tile from its (e.g., four) boundaries with a searching based third part algorithm (e.g., such as a Knapsack problem solver). The Super Tile's size may not exceed the tile buffer size available on-chip. Fig. 5B illustrates the search based Super Tile generating mechanism, according to an embodiment. The generation of the next Super Tile will follow the same process until all Super Tiles are generated.

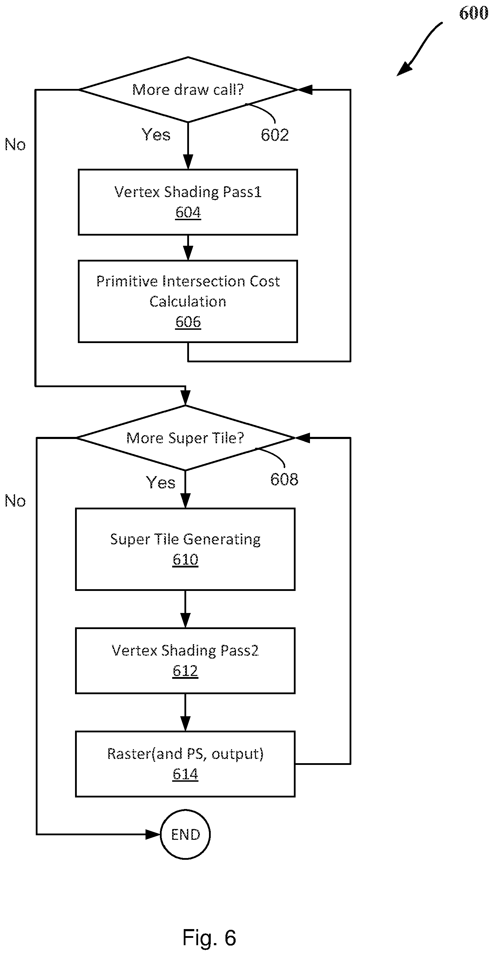

Fig. 6 illustrates a flow diagram of a method 600 to perform tile-based rendering operations, according to some embodiments. One or more components discussed herein with reference to Figs. 1-5C and 7-9 (including for example graphics logic 140) may be used to perform one or more operations discussed with reference to Fig. 6.

Referring to Figs. 1-6, in response to a determination that more draw calls remain to process at operation 602, the VS logic 306-1 of Fig. 3B loads the vertex data (e.g., such as vertex position, vertex normal, and texture coordinators) and performs screen position calculations in a primitive manner at an operation 604. At an operation 606, a Primitive Intersection Cost Calculation module (e.g., of logic 140) calculates the PICT for each atomic tile. In an embodiment, operations 604 and 606 may be pipelined or otherwise performed concurrently (for example, operation 604 completes drawcall #1 and passes the results to operation 606, and operation 606 will process drawcall #1, while operation 604 starts to process drawcall #2).

Once no more draw calls remain to process per operation 602, an operation 608 determines whether more super tiles need to be generated. The shape and layout of Super Tiles will be decided by a Super Tile Generating module (e.g., of logic 140) at an operation 610. In an embodiment, the input to operation 610 is from PICB (e.g., of Fig. 4C). Moreover, in various embodiments, method 600 can be executed on dedicated hardware or unified shader, according to the requirements. After one Super Tile has been generated, the Super Tiles table will be sent to VS logic (e.g., VS logic 306-2 of Fig. 3B) for processing at operation 612. At an operation 614 subsequent processing (e.g., by raster logic 310 of Fig. 3B, Pixel Shading (PS)) is performed in tile manner. In an embodiment, operation 610 may be pipelined or otherwise work concurrently with operations 612 and 614.

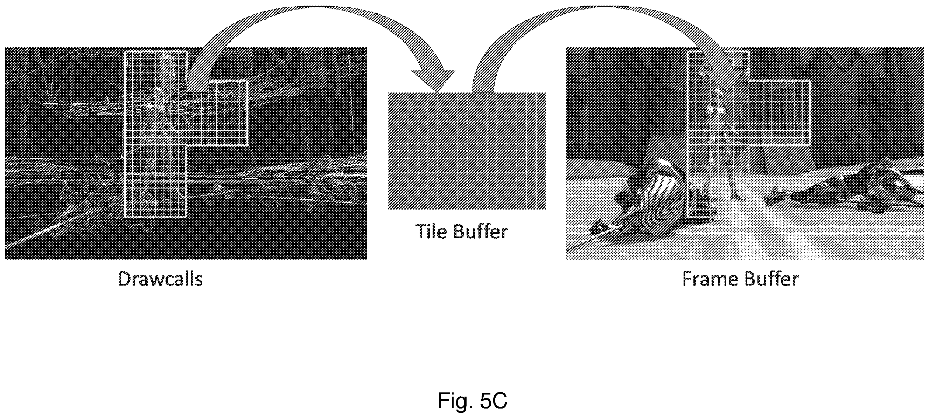

Referring to Fig. 5C, the flow of image data from a tile buffer to a frame buffer is shown, according to an embodiment. As Figs. 5C shows, when rendering a Super Tile, the depth and color result will be cached in on-chip tile buffer atomic Tile by atomic Tile. When all draw calls related to this Super Tile are completely rendered, the final result will be stored in the frame buffer from on-chip tile buffer for subsequent presentation on a display device (such as the display devices discussed herein).

Fig. 7 illustrates a block diagram of a computing system 700 in accordance with an embodiment. The computing system 700 may include one or more central processing unit(s) (CPUs) 702 or processors that communicate via an interconnection network (or bus) 704. The processors 702 may include a general purpose processor, a network processor (that processes data communicated over a computer network 703), or other types of a processor (including a reduced instruction set computer (RISC) processor or a complex instruction set computer (CISC)).

Moreover, the processors 702 may have a single or multiple core design. The processors 702 with a multiple core design may integrate different types of processor cores on the same integrated circuit (IC) die. Also, the processors 702 with a multiple core design may be implemented as symmetrical or asymmetrical multiprocessors. In an embodiment, one or more of the processors 702 may be the same or similar to the processors 102 of Fig. 1. For example, one or more components of system 700 may include logic 140, discussed with reference to Figs. 1-6. Also, the operations discussed with reference to Figs. 1-6 may be performed by one or more components of the system 700.

A chipset 706 may also communicate with the interconnection network 704. The chipset 706 may include a graphics memory control hub (GMCH) 708, which may be located in various components of system 700 (such as those shown in Fig. 7). The GMCH 708 may include a memory controller 710 that communicates with a memory 712 (which may be the same or similar to the memory 114 of Fig. 1). The memory 712 may store data, including sequences of instructions, that may be executed by the CPU 702, or any other device included in the computing system 700. In one embodiment, the memory 712 may include one or more volatile storage (or memory) devices such as random access memory (RAM), dynamic RAM (DRAM), synchronous DRAM (SDRAM), static RAM (SRAM), or other types of storage devices. Nonvolatile memory may also be utilized such as a hard disk. Additional devices may communicate via the interconnection network 704, such as multiple CPUs and/or multiple system memories.

The GMCH 708 may also include a graphics interface 714 that communicates with a display device 716. In one embodiment, the graphics interface 714 may communicate with the display device 716 via an accelerated graphics port (AGP) or Peripheral Component Interconnect (PCI) (or PCI express (PCIe) interface). In an embodiment, the display 716 (such as a flat panel display) may communicate with the graphics interface 714 through, for example, a signal converter that translates a digital representation of an image stored in a storage device such as video memory or system memory into display signals that are interpreted and displayed by the display 716. The display signals produced by the display device may pass through various control devices before being interpreted by and subsequently displayed on the display 716.

A hub interface 718 may allow the GMCH 708 and an input/output control hub (ICH) 720 to communicate. The ICH 720 may provide an interface to I/O device(s) that communicate with the computing system 700. The ICH 720 may communicate with a bus 722 through a peripheral bridge (or controller) 724, such as a peripheral component interconnect (PCI) bridge, a universal serial bus (USB) controller, or other types of peripheral bridges or controllers. The bridge 724 may provide a data path between the CPU 702 and peripheral devices. Other types of topologies may be utilized. Also, multiple buses may communicate with the ICH 720, e.g., through multiple bridges or controllers. Moreover, other peripherals in communication with the ICH 720 may include, in various embodiments, integrated drive electronics (IDE) or small computer system interface (SCSI) hard drive(s), USB port(s), a keyboard, a mouse, parallel port(s), serial port(s), floppy disk drive(s), digital output support (e.g., digital video interface (DVI)), or other devices.

The bus 722 may communicate with an audio device 726, one or more disk drive(s) 728, and a network interface device 730 (which is in communication with the computer network 703). Other devices may communicate via the bus 722. Also, various components (such as the network interface device 730) may communicate with the GMCH 708 in some embodiments. In addition, the processor 702 and the GMCH 708 may be combined to form a single chip. Furthermore, a graphics accelerator may be included within the GMCH 708 in other embodiments.

Furthermore, the computing system 700 may include volatile and/or nonvolatile memory (or storage). For example, nonvolatile memory may include one or more of the following: read-only memory (ROM), programmable ROM (PROM), erasable PROM (EPROM), electrically EPROM (EEPROM), a disk drive (e.g., 728), a floppy disk, a compact disk ROM (CD-ROM), a digital versatile disk (DVD), flash memory, a magneto-optical disk, or other types of nonvolatile machine-readable media that are capable of storing electronic data (e.g., including instructions).

Fig. 8 illustrates a computing system 800 that is arranged in a point-to-point (PtP) configuration, according to an embodiment. In particular, Fig. 8 shows a system where processors, memory, and input/output devices are interconnected by a number of point-to-point interfaces. The operations discussed with reference to Figs. 1-7 may be performed by one or more components of the system 800.

As illustrated in Fig. 8, the system 800 may include several processors, of which only two, processors 802 and 804 are shown for clarity. The processors 802 and 804 may each include a local memory controller hub (MCH) 806 and 808 to enable communication with memories 810 and 812. The memories 810 and/or 812 may store various data such as those discussed with reference to the memory 712 of Fig. 7.

In an embodiment, the processors 802 and 804 may be one of the processors 702 discussed with reference to Fig. 7. The processors 802 and 804 may exchange data via a point-to-point (PtP) interface 814 using PtP interface circuits 816 and 818, respectively. Also, the processors 802 and 804 may each exchange data with a chipset 820 via individual PtP interfaces 822 and 824 using point-to-point interface circuits 826, 828, 830, and 832. The chipset 820 may further exchange data with a graphics circuit 834 via a graphics interface 836, e.g., using a PtP interface circuit 837.

At least one embodiment may be provided within the processors 802 and 804. For example, one or more components of system 800 may include logic 140 of Figs. 1-7, including located within the processors 802 and 804. Other embodiments, however, may exist in other circuits, logic units, or devices within the system 800 of Fig. 8. Furthermore, other embodiments may be distributed throughout several circuits, logic units, or devices illustrated in Fig. 8.

The chipset 820 may communicate with a bus 840 using a PtP interface circuit 841. The bus 840 may communicate with one or more devices, such as a bus bridge 842 and I/O devices 843. Via a bus 844, the bus bridge 842 may communicate with other devices such as a keyboard/mouse 845, communication devices 846 (such as modems, network interface devices, or other communication devices that may communicate with the computer network 703), audio I/O device 847, and/or a data storage device 848. The data storage device 848 may store code 849 that may be executed by the processors 802 and/or 804.

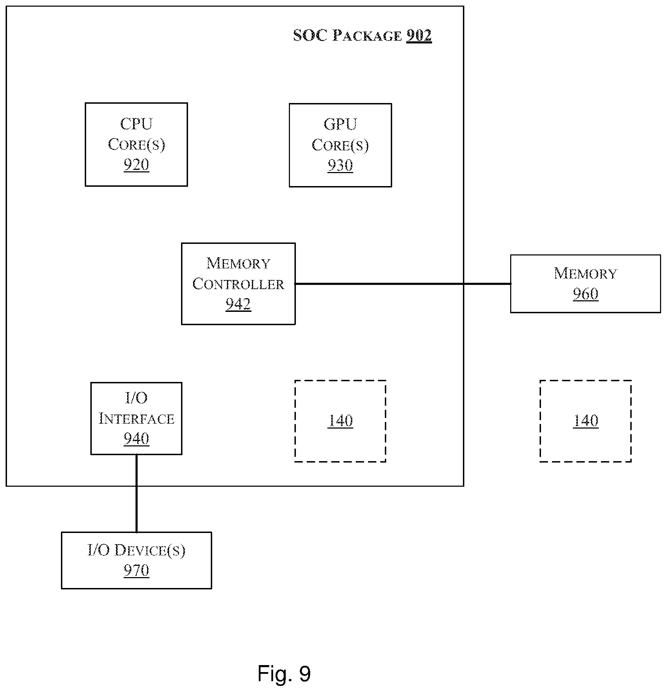

In some embodiments, one or more of the components discussed herein can be embodied as a System On Chip (SOC) device. Fig. 9 illustrates a block diagram of an SOC package in accordance with an embodiment. As illustrated in Fig. 9, SOC 902 includes one or more Central Processing Unit (CPU) cores 920, one or more Graphics Processor Unit (GPU) cores 930, an Input/Output (I/O) interface 940, and a memory controller 942. Various components of the SOC package 902 may be coupled to an interconnect or bus such as discussed herein with reference to the other figures. Also, the SOC package 902 may include more or less components, such as those discussed herein with reference to the other figures. Further, each component of the SOC package 920 may include one or more other components, e.g., as discussed with reference to the other figures herein. In one embodiment, SOC package 902 (and its components) is provided on one or more Integrated Circuit (IC) die, e.g., which are packaged into a single semiconductor device.

As illustrated in Fig. 9, SOC package 902 is coupled to a memory 960 (which may be similar to or the same as memory discussed herein with reference to the other figures) via the memory controller 942. In an embodiment, the memory 960 (or a portion of it) can be integrated on the SOC package 902.

The I/O interface 940 may be coupled to one or more I/O devices 970, e.g., via an interconnect and/or bus such as discussed herein with reference to other figures. I/O device(s) 970 may include one or more of a keyboard, a mouse, a touchpad, a display, an image/video capture device (such as a camera or camcorder/video recorder), a touch screen, a speaker, or the like. Furthermore, SOC package 902 may include/integrate the logic 140 in an embodiment. Alternatively, the logic 140 may be provided outside of the SOC package 902 (i.e., as a discrete logic).

In various embodiments, the operations discussed herein, e.g., with reference to Figs. 1-9, may be implemented as hardware (e.g., logic circuitry), software, firmware, or combinations thereof, which may be provided as a computer program product, e.g., including a tangible (e.g., non-transitory) machine-readable or computer-readable medium having stored thereon instructions (or software procedures) used to program a computer to perform a process discussed herein.

The machine-readable medium may include a storage device such as those discussed with respect to Figs. 1-9.

Additionally, such computer-readable media may be downloaded as a computer program product, wherein the program may be transferred from a remote computer (e.g., a server) to a requesting computer (e.g., a client) by way of data signals provided in a carrier wave or other propagation medium via a communication link (e.g., a bus, a modem, or a network connection).

Reference in the specification to "one embodiment" or "an embodiment" means that a particular feature, structure, and/or characteristic described in connection with the embodiment may be included in at least an implementation. The appearances of the phrase "in one embodiment" in various places in the specification may or may not be all referring to the same embodiment.

Also, in the description and claims, the terms "coupled" and "connected," along with their derivatives, may be used. In some embodiments, "connected" may be used to indicate that two or more elements are in direct physical or electrical contact with each other. "Coupled" may mean that two or more elements are in direct physical or electrical contact. However, "coupled" may also mean that two or more elements may not be in direct contact with each other, but may still cooperate or interact with each other.

**Claims**

1.  An apparatus for adaptive tile partitioning comprising:

    logic (140), the logic at least partially comprising hardware logic, to determine a primitive intersection cost value of primitives spanning over multiple atomic tiles (401) of an image at least partially based on a vertex element size, a vertex shader length, and a number of the vertices of a primitive of the image,
    to generate a super tile (402; 403) based on the primitive intersection cost value for each atomic tile value, wherein a super tile is made up of a set of atomic tiles, and
    to perform one or more vertex shading operations or one or more raster operations on the super tile.

2.  The apparatus of claim 1, wherein the atomic tile (401) is to comprise an undividable rectangle pixel block.

3.  The apparatus of claim 1, wherein the logic (140) is further to load vertex data and perform screen position calculations, wherein the vertex data is to comprise a vertex position, vertex normal, and texture coordinators.

4.  The apparatus of claim 1, wherein the logic (140) is to determine the primitive intersection cost value at least partially based on the vertex element size, the vertex shader length, the number of the vertices, a weight of the vertex element size, and a weight of the vertex shader length.

5.  The apparatus of claim 1, wherein a processor (102-1) is to comprise the logic (140).

6.  The apparatus of claim 1, wherein a processor (102-1) having one or more processor cores (106-1, 106-2, ..., 106-M), the logic (140), or memory are on a single integrated circuit die.

7.  A computer-implemented method for adaptive tile partitioning comprising: determining a primitive intersection cost value of primitives spanning over multiple atomic tiles (401) of an image at least partially based on a vertex element size, a vertex shader length, and a number of the vertices of a primitive of the image

    generating a super tile (402; 403) based on the primitive intersection cost value for each atomic tile value, and performing one or more vertex shading operations or one or more raster operations on the super tile.

8.  The method of claim 7, further comprising loading vertex data and performing screen position calculations, wherein the vertex data is to comprise a vertex position, vertex normal, and texture coordinators.

9.  The method of claim 7, further comprising determining the primitive intersection cost value at least partially based on the vertex element size, the vertex shader length, the number of the vertices, a weight of the vertex element size, and a weight of the vertex shader length.

10. Machine-readable storage including machine-readable instructions, which when executed, implement a method as set forth in any one of claims 7 to 9.

**Patentansprüche**

1. Vorrichtung zur adaptiven Kachelunterteilung, umfassend:

   Logik (140), wobei die Logik wenigstens teilweise Hardwarelogik umfasst, um einen Primitivüberschneidungs-Kostenwert von Primitiven zu bestimmen, die mehrere atomare Kacheln (401) eines Bildes umspannen, wenigstens teilweise basierend auf einer Vertexelementgröße, einer Vertexschattiererlänge und einer Anzahl der Vertices eines Primitivs des Bildes,
   um eine Superkachel (402; 403) basierend auf dem Primitivüberschneidungs-Kostenwert für den Wert jeder atomaren Kachel zu erzeugen, wobei eine Superkachel aus einem Satz von atomaren Kacheln besteht, und
   um eine oder mehrere Vertexschattierungsoperationen oder eine oder mehrere Rasterschattierungsoperationen an der Superkachel durchzuführen.

2. Vorrichtung nach Anspruch 1, wobei die atomare Kachel (401) einen unteilbaren rechteckigen Pixelblock umfassen soll.

3. Vorrichtung nach Anspruch 1, wobei die Logik (140) ferner Vertexdaten laden und Bildschirmpositionsberechnungen durchführen soll, wobei die Vertexdaten eine Vertexposition, eine Vertexnormale und Texturkoordinatoren umfassen sollen.

4. Vorrichtung nach Anspruch 1, wobei die Logik (140) den Primitivüberschneidungs-Kostenwert wenigstens teilweise basierend auf der Vertexelementgröße, der Vertexschattiererlänge, der Anzahl der Vertices, einem Gewicht der Vertexelementgröße und einem Gewicht der Vertexschattiererlänge bestimmen soll.

5. Vorrichtung nach Anspruch 1, wobei ein Prozessor (102-1) die Logik (140) umfassen soll.

6. Vorrichtung nach Anspruch 1, wobei sich ein Prozessor (102-1) mit einem oder mehreren Prozessorkernen (106-1, 106-2, ..., 106-M), die Logik (140) oder Speicher auf einem einzelnen IC (Integrated Circuit)-Chip befindet.

7. Computer-implementiertes Verfahren zur adaptiven Kachelunterteilung, umfassend:

   Bestimmen eines Primitivüberschneidungs-Kostenwertes von Primitiven, die mehrere atomare Kacheln (401) eines Bildes überspannen, wenigstens teilweise basierend auf einer Vertexelementgröße, einer Vertexschattiererlänge und einer Anzahl der Vertices eines Primitivs des Bildes,
   Erzeugen einer Superkachel (402; 403) basierend auf dem Primitivüberschneidungs-Kostenwert für den Wert jeder atomaren Kachel, und
   Durchführen einer oder mehrerer Vertexschattierungsoperationen oder einer oder mehrerer Rasterschattierungsoperationen an der Superkachel.

8. Verfahren nach Anspruch 7, ferner umfassend das Laden von Vertexdaten und das Durchführen von Bildschirmpositionsberechnungen, wobei die Vertexdaten eine Vertexposition, eine Vertexnormale und Texturkoordinatoren umfassen sollen.

9. Verfahren nach Anspruch 7, ferner umfassend das Bestimmen des Primitivüberschneidungs-Kostenwertes wenigstens teilweise basierend auf der Vertexelementgröße, der Vertexschattiererlänge, der Anzahl der Vertices, einem Gewicht der Vertexelementgröße und einem Gewicht der Vertexschattiererlänge.

10. Maschinenlesbarer Speicher, der maschinenlesbare Anweisungen enthält, die bei Ausführung ein Verfahren nach einem der Ansprüche 7 bis 9 implementieren.

**Revendications**

1. Appareil pour le partitionnement adaptatif de carreaux comprenant :

   une logique (140), la logique comprenant au moins partiellement une logique matérielle, pour déterminer une valeur de coût d'intersection primitive de primitives s'étendant sur plusieurs carreaux atomiques (401) d'une image, en se basant au moins partiellement sur une taille d'élément de vertex, une longueur de nuanceur de vertex, et le nombre des vertex d'une primitive de l'image,
pour générer un super carreau (402 ; 403) sur la base de la valeur de coût d'intersection primitive pour chaque valeur de carreau atomique, où un super carreau est constitué d'un ensemble de carreaux atomiques, et
pour exécuter une ou plusieurs opérations de nuançage de vertex ou une ou plusieurs opérations récurrentes sur le super carreau.

2. Appareil selon la revendication 1, dans lequel le carreau atomique (401) doit comprendre un bloc de pixels rectangulaires indivisible.

3. Appareil selon la revendication 1, dans lequel la logique (140) est en outre destinée à charger des données de vertex et à effectuer des calculs de position d'écran, où les données de vertex doivent comprendre une position de vertex, une normale de vertex et des coordinateurs de texture.

4. Appareil selon la revendication 1, dans lequel la logique (140) doit déterminer la valeur de coût d'intersection primitive au moins partiellement sur la base de la taille de l'élément de vertex, de la longueur du nuanceur de vertex, du nombre de vertex, d'un poids de la taille de l'élément de vertex, et d'un poids de la longueur du nuanceur de vertex.

5. Appareil selon la revendication 1, dans lequel un processeur (102-1) doit comprendre la logique (140).

6. Appareil selon la revendication 1, dans lequel un processeur (102-1) ayant un ou plusieurs coeurs de processeur (106-1, 106-2, ...., 106-M), la logique (140) ou la mémoire sont sur un seul dé de circuit intégré.

7. Procédé mis en oeuvre par ordinateur pour le partitionnement adaptatif de carreaux comprenant les étapes suivantes :

déterminer une valeur de coût d'intersection primitive de primitives s'étendant sur plusieurs carreaux atomiques (401) d'une image, en se basant au moins partiellement sur une taille d'élément de vertex, une longueur de nuanceur de vertex, et le nombre des vertex d'une primitive de l'image
générer un super carreau (402 ; 403) sur la base de la valeur de coût d'intersection primitive pour chaque valeur de carreau atomique, et
exécuter une ou plusieurs opérations de nuançage de vertex ou une ou plusieurs opérations récurrentes sur le super carreau.

8. Procédé selon la revendication 7, comprenant en outre le chargement de données de vertex et l'exécution de calculs de position d'écran, où les données de vertex doivent comprendre une position de vertex, une normale de vertex et des coordinateurs de texture.

9. Procédé selon la revendication 7, comprenant en outre la détermination de la valeur de coût d'intersection primitive au moins partiellement sur la base de la taille de l'élément de vertex, de la longueur du nuanceur de vertex, du nombre de vertex, d'un poids de la taille de l'élément de vertex, et d'un poids de la longueur du nuanceur de vertex.

10. Stockage lisible par machine, comprenant des instructions lisibles par machine qui, lorsqu'elles sont exécutées, mettent en oeuvre un procédé tel qu'énoncé dans l'une quelconque des revendications 7 à 9.

100

CORE 1
106-1

L1
116-1

CORE 2
106-2

• • •

CORE M
106-M

112

ROUTER
110

CACHE
108

GRAPHICS
LOGIC
140

INTERCONNECTION
104

MEMORY
114

PROCESSOR 102-3

PROCESSOR 102-1

PROCESSOR 102-2

PROCESSOR 102-N

Fig.1

A: Traditional Tile partition

B: Adaptive Tile Partition

Fig.2

302

VBO

304

Parameter
Buffer

Memory

Core

VS

306

Culling

308

Raster

310

**Fig. 3A**

302

VBO

312

Drawcall
& Primitive
Mask

Memory

Core

VS_pass1

306-1

Culling

308

VS_pass2

306-2

Raster

310

**Fig. 3B**

EP 3 161 793 B1

Atomic Tile
401

Rectangle Tile 402

Irregular Tile 403

Fig. 4A

EP 3 161 793 B1

Fig. 4B

Fig. 4C

A: Primitive Intersection Cost

B: Original Image

Fig. 5A

Step N

Fig. 5B

Step N + 1

EP 3 161 793 B1

Fig. 5C

*600*

More draw call? *602*

Yes

No

Vertex Shading Pass1
604

Primitive Intersection Cost
Calculation
606

More Super Tile? *608*

Yes

No

Super Tile Generating
610

Vertex Shading Pass2
612

Raster(and PS, output)
614

END

Fig. 6

700

PROCESSOR

GMCH 708

140

702-1

• • • •

PROCESSOR

GMCH 708

140

702-n

704

GMCH

708

140

MEMORY CONTROLLER 710

GRAPHICS INTERFACE 714

MEMORY 712

DISPLAY 716

140

718

140

ICH

720

PERIPHERAL BRIDGE 724

CHIPSET/IO COMPLEX 706

722

AUDIO DEVICE 726

DISK DRIVE 728

NETWORK INTERFACE DEVICE 730

NETWORK 703

Fig. 7

*800*

Fig. 8

SOC PACKAGE <u>902</u>

CPU
CORE(S)
<u>920</u>

GPU
CORE(S)
<u>930</u>

MEMORY
CONTROLLER
<u>942</u>

MEMORY
<u>960</u>

I/O
INTERFACE
<u>940</u>

<u>140</u>

<u>140</u>

I/O DEVICE(S)
<u>970</u>

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013130030 A1